# EUROPEAN PATENT APPLICATION

(11) **EP 4 531 377 A1**
(43) Date of publication of application: **02.04.2025**
(21) Application number: 24198342.8
(22) Date of filing: 04.09.2024
(51) Int. Cl.: H04L 65/1066, H04L 65/65, H04L 65/80

(54) **METHOD FOR SLEEP STATE TRANSITIONS**

(30) Priority: 28.09.2023 FI 20236083
(71) Applicant: Nokia Technologies Oy, 02610 Espoo (FI)
(72) Inventor: AHSAN, Saba, Espoo (FI); PARIS, Stefano, Vanves (FR); GÜL, Serhan, Berlin (DE); SEBIRE, Benoist Pierre, Tokyo (JP)
(74) Representative: Nokia EPO representatives

(57) **Abstract**

An apparatus comprising: means for receiving a session setup signalling for at least one Real-time Transport Protocol (RTP) stream, said signalling comprising a set of threshold values for indicating a time interval between two consecutive data bursts in a transmission of said at least one RTP stream; means for sending an acknowledgement to the session setup signalling, said acknowledgement comprising feedback information about suitability of the set of threshold values for receiving said at least one RTP stream in the apparatus; and means for initiating streaming of said at least one RTP stream, wherein header information of said at least one RTP stream comprises the set of threshold values corresponding to the feedback information.

## Description

### TECHNICAL FIELD

The present invention relates to sleep state transitions of a user equipment.

### BACKGROUND

Various Extended Reality and Media (XRM) services may be provided in modern communication networks, such as in 5G/NR (5^{th} Generation/New Radio) networks. One or more RTP streams are typically established for delivering the services to an end-user, such as a User Equipment (UE).

The user data of the services is delivered in protocol data units (PDU), which are organized in PDU sets, defined more precisely in 3GPP TS 23.501. A PDU Set is composed of one or more PDUs carrying one unit of information generated at the application level (e.g. a frame or video slice for XRM Services), which are of same importance requirement at application layer. The actual transmission is performed as data bursts, which may comprise a set of multiple PDUs generated and sent by the application in a short period of time. A Data Burst can be composed by one or multiple PDU Sets.

The PDU Set marking is typically delivered in a RTP Header Extension (HE) along with an indication of the end of data burst (EDB). The EDB informs the UE that there is an opportunity to transition to a sleep state until the beginning of the next burst, thereby enabling to save energy of the UE.

Nevertheless, a sender entity, such as an application server or another user equipment, may not always know the exact time to next burst with a millisecond precision, which leads to sub-optimal energy saving. There is no mechanism to update the EDB-related information dynamically such that the relevant network elements are updated.

### SUMMARY

Now, an improved method and technical equipment implementing the method have been invented, by which the above problems are alleviated. Various aspects include a method, an apparatus and a non-transitory computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising means for receiving a session setup signalling for at least one Real-time Transport Protocol (RTP) stream, said signalling comprising a set of threshold values for indicating a time interval between two consecutive data bursts in a transmission of said at least one RTP stream; means for sending an acknowledgement to the session setup signalling, said acknowledgement comprising feedback information about suitability of the set of threshold values for receiving said at least one RTP stream in the apparatus; and means for initiating streaming of said at least one RTP stream, wherein header information of said at least one RTP stream comprises the set of threshold values corresponding to the feedback information.

According to an embodiment, the apparatus comprises means for determining an updated set of threshold values, wherein said acknowledgement comprises the updated set of threshold values.

According to an embodiment, the apparatus comprises means for receiving a configuration for power saving settings.

According to an embodiment, the apparatus comprises means for determining an updated set of threshold values for the initiated at least one RTP stream at least partly based on the configuration for power saving settings.

According to an embodiment, the apparatus comprises means for sending feedback information about the updated set of threshold values in a Real-time Transport Control Protocol (RTCP) message.

According to an embodiment, the apparatus comprises means for measuring a ratio between time spent for receiving data by a receiver of the apparatus and overall active time of the receiver; means for updating, in response to said ratio being larger than a predetermined threshold, the set of threshold values; wherein said means for sending feedback are configured to send the updated set of threshold values.

According to an embodiment, updating the threshold values is triggered by one or more of the following:
- determining that one or more Protocol Data Units (PDUs) in a burst have been dropped by a network;
- determining that a PDU Set has been delivered beyond a predetermined delay budget.

According to an embodiment, the suitability of the set of threshold values for receiving said at least one RTP stream and/or updating the set of threshold values is performed based on one or more of the following:
- an observed jitter;
- adaptation of media frame rate;
- used pacing strategy;
- periodicity of the traffic;
- used encoder configuration.

An apparatus according to a second aspect comprises at least one processor and at least one memory, said at least one memory stored with computer program code thereon, the at least one memory and the computer program code configured to, with the at least one processor, cause the apparatus at least to perform: receiving a session setup signalling for at least one Real-time Transport Protocol (RTP) stream, said signalling comprising a set of threshold values for indicating a time interval between two consecutive data bursts in a transmission of said at least one RTP stream; sending an acknowledgement to the session setup signalling, said acknowledgement comprising feedback information about suitability of the set of threshold values for receiving said at least one RTP stream in the apparatus; and initiating streaming of said at least one RTP stream, wherein header information of said at least one RTP stream comprises the set of threshold values corresponding to the feedback information.

A method according to a third aspect comprises receiving, by a user equipment, a session setup signalling for at least one Real-time Transport Protocol (RTP) stream, said signalling comprising a set of threshold values for indicating a time interval between two consecutive data bursts in a transmission of said at least one RTP stream; sending an acknowledgement to the session setup signalling, said acknowledgement comprising feedback information about suitability of the set of threshold values for receiving said at least one RTP stream in the user equipment; and initiating streaming of said at least one RTP stream, wherein header information of said at least one RTP stream comprises the set of threshold values corresponding to the feedback information.

An apparatus according a fourth aspect comprises means for sending a session setup signalling for at least one Real-time Transport Protocol (RTP) stream destined to at least one user equipment, said signalling comprising a set of threshold values for indicating a time interval between two consecutive data bursts in a transmission of said at least one RTP stream; means for receiving an acknowledgement to the session setup signalling, said acknowledgement comprising feedback information about suitability of the set of threshold values for receiving said at least one RTP stream in the user equipment; and means for initiating streaming of said at least one RTP stream, wherein header information of said at least one RTP stream comprises the set of threshold values corresponding to the feedback information.

According to an embodiment, the apparatus comprises means for receiving an updated set of threshold values in said acknowledgement; and means for updating the threshold values.

According to an embodiment, the apparatus comprises means for including the updated threshold values in a RTP Header Extension with a Protocol Data Unit (PDU) set marking.

According to an embodiment, the apparatus comprises means for receiving feedback information about the updated set of threshold values in a Real-time Transport Control Protocol (RTCP) message.

An apparatus according a fifth aspect comprises at least one processor and at least one memory, said at least one memory stored with computer program code thereon, the at least one memory and the computer program code configured to, with the at least one processor, cause the apparatus at least to perform: sending a session setup signalling for at least one Real-time Transport Protocol (RTP) stream destined to at least one user equipment, said signalling comprising a set of threshold values for indicating a time interval between two consecutive data bursts in a transmission of said at least one RTP stream; receiving an acknowledgement to the session setup signalling, said acknowledgement comprising feedback information about suitability of the set of threshold values for receiving said at least one RTP stream in the user equipment; and initiating streaming of said at least one RTP stream, wherein header information of said at least one RTP stream comprises the set of threshold values corresponding to the feedback information.

A method according to a sixth aspect comprises sending a session setup signalling for at least one Real-time Transport Protocol (RTP) stream destined to at least one user equipment, said signalling comprising a set of threshold values for indicating a time interval between two consecutive data bursts in a transmission of said at least one RTP stream; receiving an acknowledgement to the session setup signalling, said acknowledgement comprising feedback information about suitability of the set of threshold values for receiving said at least one RTP stream in the user equipment; and means for initiating streaming of said at least one RTP stream, wherein header information of said at least one RTP stream comprises the set of threshold values corresponding to the feedback information.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Fig. 1 shows a schematic block diagram of an apparatus for incorporating a random access arrangement according to the embodiments;
Fig. 2 shows schematically a layout of an apparatus according to an example embodiment;
Fig. 3 shows a part of an exemplifying radio access network;
Figs. 4a - 4c show examples of performing the PDU Set marking at the UPF;
Fig. 5 shows a flow chart for a procedure for updating threshold values used for indicating a time interval between two consecutive data bursts according to an embodiment;
Fig. 6 shows a signalling chart illustrating the network elements and the signalling involved in various embodiments; and
Figs. 7a and 7b show examples of problems caused by unprecise EDB values.
Figure 8 shows a flow chart reflecting the operation of a sender entity corresponding to that of the operation of the terminal apparatus in the flow chart of Figure 5.

### DETAILED DESCRIPTON OF SOME EXAMPLE EMBODIMENTS

The following describes in further detail suitable apparatus and possible mechanisms carrying out. While the following focuses on 5G networks, the embodiments as described further below are by no means limited to be implemented in said networks only, but they are applicable in any network supporting.

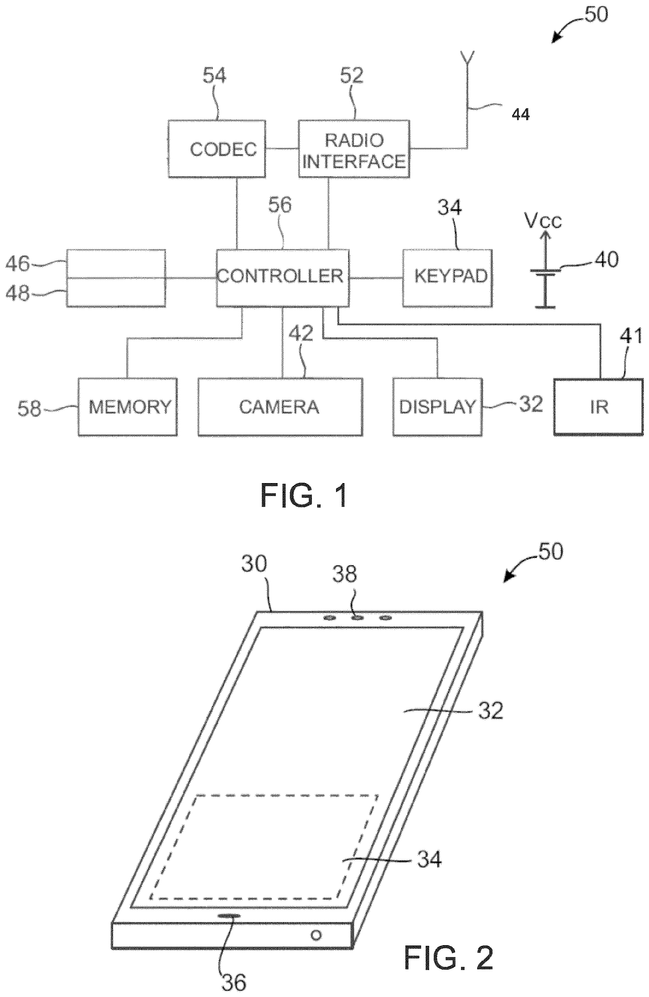

In this regard, reference is first made to Figures 1 and 2, where Figure 1 shows a schematic block diagram of an exemplary apparatus or electronic device 50, which may incorporate the arrangement according to the embodiments. Figure 2 shows a layout of an apparatus according to an example embodiment. The elements of Figs. 1 and 2 will be explained next.

The electronic device 50 may for example be a mobile terminal or user equipment of a wireless communication system. The apparatus 50 may comprise a housing 30 for incorporating and protecting the device. The apparatus 50 further may comprise a display 32 and a keypad 34. Instead of the keypad, the user interface may be implemented as a virtual keyboard or data entry system as part of a touch-sensitive display.

The apparatus may comprise a microphone 36 or any suitable audio input which may be a digital or analogue signal input. The apparatus 50 may further comprise an audio output device, such as anyone of: an earpiece 38, speaker, or an analogue audio or digital audio output connection. The apparatus 50 may also comprise a battery 40 (or the device may be powered by any suitable mobile energy device such as solar cell, fuel cell or clockwork generator). The apparatus may further comprise a camera 42 capable of recording or capturing images and/or video. The apparatus 50 may further comprise an infrared port 41 for short range line of sight communication to other devices. In other embodiments the apparatus 50 may further comprise any suitable short-range communication solution such as for example a Bluetooth wireless connection or a USB/firewire wired connection.

The apparatus 50 may comprise a controller 56 or processor for controlling the apparatus 50. The controller 56 may be connected to memory 58 which may store both user data and instructions for implementation on the controller 56. The memory may be random access memory (RAM) and/or read only memory (ROM). The memory may store computer-readable, computer-executable software including instructions that, when executed, cause the controller/processor to perform various functions described herein. In some cases, the software may not be directly executable by the processor but may cause a computer (e.g., when compiled and executed) to perform functions described herein. The controller 56 may further be connected to codec circuitry 54 suitable for carrying out coding and decoding of audio and/or video data or assisting in coding and decoding carried out by the controller.

The apparatus 50 may comprise radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

In the following, different exemplifying embodiments will be described using, as an example of an access architecture to which the embodiments may be applied, a radio access architecture based on Long Term Evolution Advanced (LTE Advanced, LTE-A) or new radio (NR, 5G), without restricting the embodiments to such an architecture, however. A person skilled in the art appreciates that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet protocol multimedia subsystems (IMS) or any combination thereof.

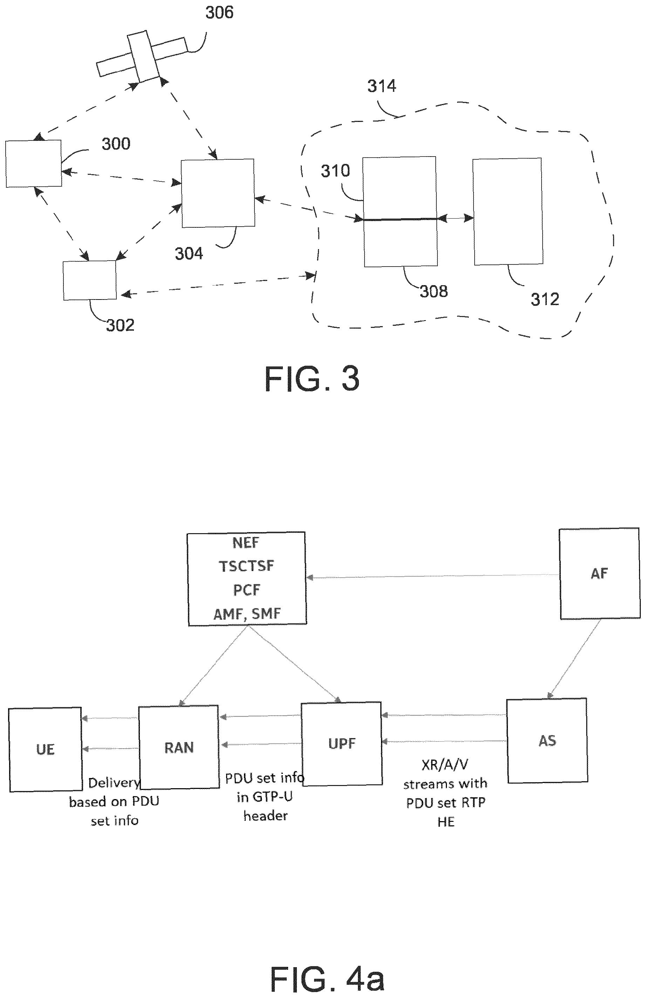

Figure 3 depicts examples of simplified system architectures only showing some elements and functional entities, all being logical units, whose implementation may differ from what is shown. The connections shown in Figure 3 are logical connections; the actual physical connections may be different. It is apparent to a person skilled in the art that the system typically comprises also other functions and structures than those shown in Figure 3. The embodiments are not, however, restricted to the system given as an example but a person skilled in the art may apply the solution to other communication systems provided with necessary properties.

The example of Figure 3 shows a part of an exemplifying radio access network.

Figure 3 shows user devices 300 and 302 configured to be in a wireless connection on one or more communication channels in a cell with an access node (such as (e/g)NodeB) 304 providing the cell. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communication system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 310 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. The CN may comprise network entities or nodes that may be referred to management entities. Examples of the network entities comprise at least an Access and Mobility Management Function (AMF).

The user device (also called a user equipment (UE), a user terminal, a terminal device, a wireless device, a mobile station (MS) etc.) illustrates one type of an apparatus to which resources on the air interface are allocated and assigned, and thus any feature described herein with a user device may be implemented with a corresponding network apparatus, such as a relay node, an eNB, and an gNB. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Accordingly, the user device may be an loT-device. The user device may also utilize cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. The access nodes of the radio network form transmission/reception (TX/Rx) points (TRPs), and the UEs are expected to access networks of at least partly overlapping multi-TRPs, such as macro-cells, small cells, pico-cells, femto-cells, remote radio heads, relay nodes, etc. The access nodes may be provided with Massive MIMO antennas, i.e. very large antenna array consisting of e.g. hundreds of antenna elements, implemented in a single antenna panel or in a plurality of antenna panels, capable of using a plurality of simultaneous radio beams for communication with the UE. The UEs may be provided with MIMO antennas having an antenna array consisting of e.g. dozens of antenna elements, implemented in a single antenna panel or in a plurality of antenna panels. Thus, the UE may access one TRP using one beam, one TRP using a plurality of beams, a plurality of TRPs using one (common) beam or a plurality of TRPs using a plurality of beams.

The 4G/LTE networks support some multi-TRP schemes, but in 5G NR the multi-TRP features are enhanced e.g. via transmission of multiple control signals via multi-TRPs, which enables to improve link diversity gain. Moreover, high carrier frequencies (e.g., mmWaves) together with the Massive MIMO antennas require new beam management procedures for multi-TRP technology.

5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

Frequency bands for 5G NR are separated into two frequency ranges: Frequency Range 1 (FR1) including sub-6 GHz frequency bands, i.e. bands traditionally used by previous standards, but also new bands extended to cover potential new spectrum offerings from 410 MHz to 7125 MHz, and Frequency Range 2 (FR2) including frequency bands from 24.25 GHz to 52.6 GHz. Thus, FR2 includes the bands in the mmWave range, which due to their shorter range and higher available bandwidth require somewhat different approach in radio resource management compared to bands in the FR1.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 312, or utilize services provided by them. The communication network may also be able to support the usage of cloud services, for example at least part of core network operations may be carried out as a cloud service (this is depicted in Fig. 3 by "cloud" 314). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU) and non-real time functions being carried out in a centralized manner (in a centralized unit, CU 308).

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well. The gNB is a next generation Node B (or, new Node B) supporting the 5G network (i.e., the NR).

5G may also utilize non-terrestrial nodes 306, e.g. access nodes, to enhance or complement the coverage of 5G service, for example by providing backhauling, wireless access to wireless devices, service continuity for machine-to-machine (M2M) communication, service continuity for Internet of Things (IoT) devices, service continuity for passengers on board of vehicles, ensuring service availability for critical communications and/or ensuring service availability for future railway/maritime/aeronautical communications. The non-terrestrial nodes may have fixed positions with respect to the Earth surface or the non-terrestrial nodes may be mobile non-terrestrial nodes that may move with respect to the Earth surface. The non-terrestrial nodes may comprise satellites and/or HAPSs. Satellite communication may utilize geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node 304 or by a gNB located on-ground or in a satellite.

A person skilled in the art appreciates that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

The Radio Resource Control (RRC) protocol is used in various wireless communication systems for defining the air interface between the UE and a base station, such as eNB/gNB. This protocol is specified by 3GPP in in TS 36.331 for LTE and in TS 38.331 for 5G. In terms of the RRC, the UE may operate in LTE and in 5G in an idle mode or in a connected mode, wherein the radio resources available for the UE are dependent on the mode where the UE at present resides. In 5G, the UE may also operate in inactive mode. In the RRC idle mode, the UE has no connection for communication, but the UE is able to listen to page messages. In the RRC connected mode, the UE may operate in different states, such as CELL_DCH (Dedicated Channel), CELL_FACH (Forward Access Channel), CELL_PCH (Cell Paging Channel) and URA_PCH (URA Paging Channel). The UE may communicate with the eNB/gNB via various logical channels like Broadcast Control Channel (BCCH), Paging Control Channel (PCCH), Common Control Channel (CCCH), Dedicated Control Channel (DCCH), Dedicated Traffic Channel (DTCH).

The transitions between the states are controlled by a state machine of the RRC. When the UE is powered up, it is in a disconnected mode/idle mode. The UE may transit to RRC connected mode with an initial attach or with a connection establishment. If there is no activity from the UE for a short time, eNB/gNB may suspend its session by moving to RRC Inactive and can resume its session by moving to RRC connected mode. The UE can move to the RRC idle mode from the RRC connected mode or from the RRC inactive mode.

The actual user and control data from network to the UEs is transmitted via downlink physical channels, which in 5G include Physical downlink control channel (PDCCH) which carries the necessary downlink control information (DCI), Physical Downlink Shared Channel (PDSCH), which carries the user data and system information for user, and Physical broadcast channel (PBCH), which carries the necessary system information to enable a UE to access the 5G network.

The user and control data from UE to the network is transmitted via uplink physical channels, which in 5G include Physical Uplink Control Channel (PUCCH), which is used for uplink control information including HARQ feedback acknowledgments, scheduling request, and downlink channel-state information for link adaptation, Physical Uplink Shared Channel (PUSCH), which is used for uplink data transmission, and Physical Random Access Channel (PRACH), which is used by the UE to request connection setup referred to as random access.

The user data is transmitted on the channels using Protocol Data Units (PDUs). For transmitting the user data, a logical connection between the UE and a data network, referred to as a PDU session, needs to be established via a User Plane Function (UPF) of the 5G core network. The PDU session may support transmitting user data on different types of services, such as voice, video, and data. The UE initiates the PDU Session Establishment process by sending a request to the 5G core network the request indicating at least the type of the requested service and the type of requested traffic. The purpose of the PDU Session Establishment process in 5G/NR networks corresponds to that of PDN (Packet Data Network) connection procedure in 4G/LTE networks.

3GPP SA2 XRM Study referred to in TS 23.700-60 and TS 23.501 provides a study on the usage of XR (Extended Reality) and Media services, inter alia, about the requirements of related applications imposed on the PDU sets used on OSI layers below the application layer. Some of the requirements are summarized below.

PDU Set: A PDU Set is composed of one or more PDUs carrying one unit of information generated at the application level (e.g. a frame or video slice for XRM Services), which are of same importance requirement at application layer. All PDUs in a PDU Set are needed by the application layer to use the corresponding unit of information. In some cases, the application layer can still recover parts of the information unit, when some PDUs are missing.

PDU set granularity: XR applications impose requirements in terms of PDU sets (e.g. video/audio frame/tile, Application Data Units etc.), rather than in terms of single packets/PDUs. Packets of one PDU set need to be jointly processed for XR traffics. 5G system should be aware of the PDU set in order to improve transmission performance. Basically, the PDU set sequence number (SN), the PDU SN within the PDU set, the PDU set importance, the indication of end PDU of the PDU set, and optionally the PDU set size in bytes should be provided to 5G system for each PDU.

TS 23.501 defines Data Burst as follows. Data Burst: A set of multiple PDUs generated and sent by the application in a short period of time. A Data Burst can be composed by one or multiple PDU Sets.

PDU Set Information: To support PDU Set based QoS handling, the PDU Session Anchor (PSA) User Plane Function (UPF) identifies PDUs that belong to PDU Sets and determines the below PDU Set Information which it sends to the Next Generation Radio Access Network (NG-RAN) in the GPRS Tunnelling Protocol User Plane (GTP-U) header. The PDU Set information is used by the NG-RAN for PDU Set handling as described above. The PDU set information may be signalled in a header extension of an RTP packet (RTP HE).

The PDU Set Information comprises:
- PDU Set Sequence Number.
- Indication of End PDU of the PDU Set
- PDU Sequence Number within a PDU Set
- PDU Set Size in bytes.
- PDU Set Importance, which identifies the importance of a PDU Set within a QoS Flow.

The NG-RAN may use the PDU Set Importance for PDU Set level packet discarding in presence of congestion. The PDU Set Size is optional. The application decides whether to send PDU Set Size or not. The PDU Set Information can be different for different PDU Sets within a QoS Flow.

In addition, to enable PDU Set based QoS handling, PDU Set QoS Parameters may be provided by the SMF to the gNB as part of the QoS profile of the QoS flow:
- PDU Set Delay Budget (PSDB): as defined in TS 23.501, upper bound for the duration between the reception time of the first PDU (at the UPF for DL, at the UE for UL) and the time when all PDUs of a PDU Set have been successfully received (at the UE in DL, at the UPF in UL). A QoS Flow is associated with only one PSDB, and when available, it applies to both DL and UL and supersedes the PDB of the QoS flow.
- PDU Set Error Rate (PSER): as defined in TS 23.501, upper bound for a rate of non-congestion related PDU Set losses between RAN and the UE. A QoS Flow is associated with only one PSER, and when available, it applies to both DL and UL and supersedes the PER of the QoS flow.
- PDU Set Integrated Handling Information (PSIHI): indicates whether all PDUs of the PDU Set are needed for the usage of PDU Set by application layer, as defined in TS 23.501.

The Session Management Function (SMF) instructs UPF to perform PDU Set marking and may provide UPF with the Protocol Description indicating the header (e.g., RTP/SRTP) and payload type (e.g. H.264) used by the service data flow. For each DL PDU received on N6 for which PDU Set handling should be performed based on the instruction from SMF, the PSA UPF applies the rules for PDU Set identification and provides PDU Set Information which is available to the RAN in the GTP-U header.

### PDU Set RTP Header Extension

TS 26.522 defines the RTP Header Extension for PDU Set marking shall support both RTP Header Extension formats (i.e., the one-byte and the two-byte formats) according to RFC 8285.

If the RTP Header Extension for PDU Set marking is the only RTP header extension used, the endpoints shall use the 1-byte header format for maximum savings. If other 2-byte RTP header extension elements are used, then the 2-byte header may be used.

The one-byte RTP Header Extension for the marking of PDU Sets and End of Bursts is defined as follows:

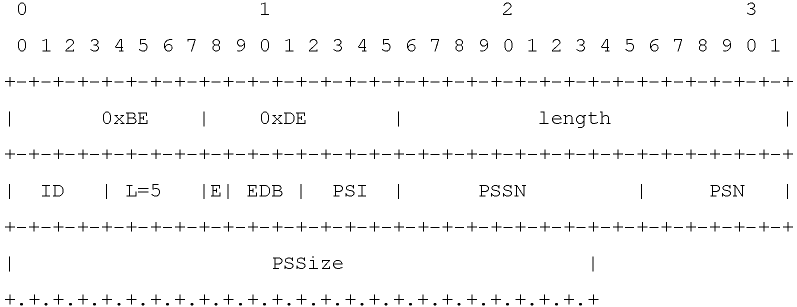

The two-byte RTP Header Extension for the marking of PDU Sets and End of Bursts is defined as follows:

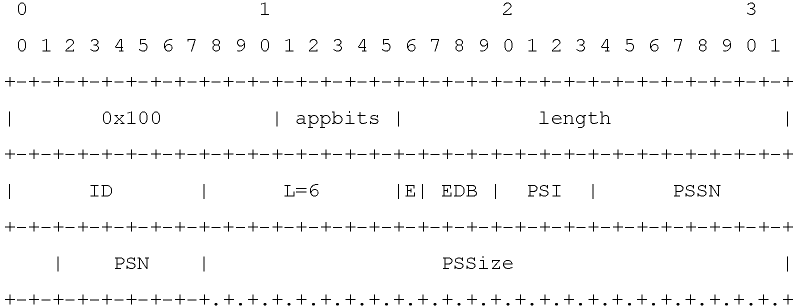

The semantics of the fields of the RTP Header Extension for the marking of PDU Set and End of Bursts are defined as follows:
- End PDU of the PDU Set [E] (1 bit): This field is a flag that shall be set to 1 for the last PDU of the PDU Set and set to 0 for all other PDUs of the PDU Set.
- End of Data Burst [EDB] (3 bits): The EDB field is 3 bits in length and indicates the end of a Data Burst. The 3 bits encode the End of Data Burst indication as per the encoding and guidelines provided in Clause 4.4.2.6.1.
- PDU Set Importance [PSI] (4 bits): The PDU Set Importance field indicates the importance of this PDU Set compared to other PDU Sets within the same RTP stream. Lower values shall indicate a higher importance PDU Set with the highest importance PDU Set indicated by 0 and the lowest importance PDU Set indicated by 15.
- **PDU** Set Sequence Number [PSSN] (10 bits): The field encodes the sequence number of the PDU Set to which the current PDU belongs acting as a 10-bit numerical identifier for the PDU Set.

NOTE 2: This value wraps around at 1023, however, using the RTP packet sequence number and PSSN pair a receiver may uniquely distinguish between any PDU Sets.
- PDU Sequence Number within a PDU Set [PSN] (6 bits): The sequence number of the current PDU within the PDU Set. The PSN shall be set to 0 for the first PDU in the PDU Set and incremented monotonically for every PDU in the PDU set in order of transmission from the sender.

NOTE 3: A receiver may use the RTP packet sequence number together with the PSN to distinguish between PDUs within a PDU Set that contains more than 64 PDUs.
- **PDU Set Size [PSSize] (24 bits):** The PDU Set Size indicates the total size of all PDUs of the PDU Set to which this PDU belongs. This field is optional and subject to an SDP signaling offer/answer negotiation, where the Application Server may indicate whether it will be able to provide the size of the PDU Set for that RTP stream. If not enabled, the field should not be present. If enabled, but the Application Server is not able to determine the PDU Set Size for a particular PDU Set, it should set the value to 0 in all PDUs of that PDU Set. The PSSize shall indicate the size of [a PDU Set including RTP/UDP/IP header encapsulation overhead of its corresponding PDUs] / [sum of RTP payload sizes of all PDUs present in a PDU Set]. The PSSize is expressed in bytes. This field may be optionally present given the signaling of the "pdu-set-size" extension attribute in the SDP offer/answer negotiation.

NOTE 4: This field may be optionally present given the signaling of the "pdu-set-size" extension attribute in the SDP offer/answer negotiation as per Clause 4.4.2.5.

### SDP Signaling

The semantics of the fields of the RTP Header Extension for the marking of PDU Set and End of Bursts are defined as follows:
The URN for the PDU Set marking shall be set to "urn:3gpp:pdu-set-marking:rel-18". 3GPP should register this header extension identifier with IANA as maintained in Real-Time Transport Protocol (RTP) Parameters (iana.org).

The ABNF syntax for the extmap attribute for the signaling of PDU Set Information and End of Burst marking is defined as follows:

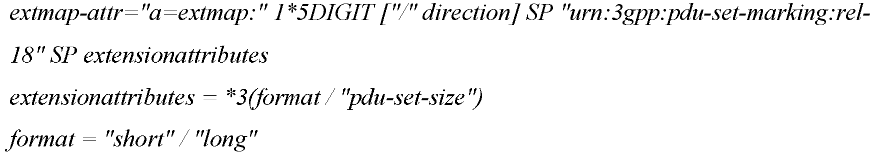

### PDU set marking use cases

There may appear various use cases for the UPF to perform the PDU Set marking, as illustrated in the examples of Figures 4a - 4c. The first use case is the case where the XR traffic originates from an Application Server (AS). An example service for this use case may be split rendering. In this case, the AS sets the PDU set information RTP HE, the UPF then translates it to the GTP-U header, which is used by RAN for the downlink delivery to the UE. The first use case is shown in Figure 4a. An example of use of the PDU set information in RAN include the triggering of the discard timer in uplink based on the PSDB. The expiry of the discard timer triggers the drop of all PDUs that belong to the same PDU set (i.e., up to End PDU of PDU set indication) when the PSIHI is set for that QoS flow.

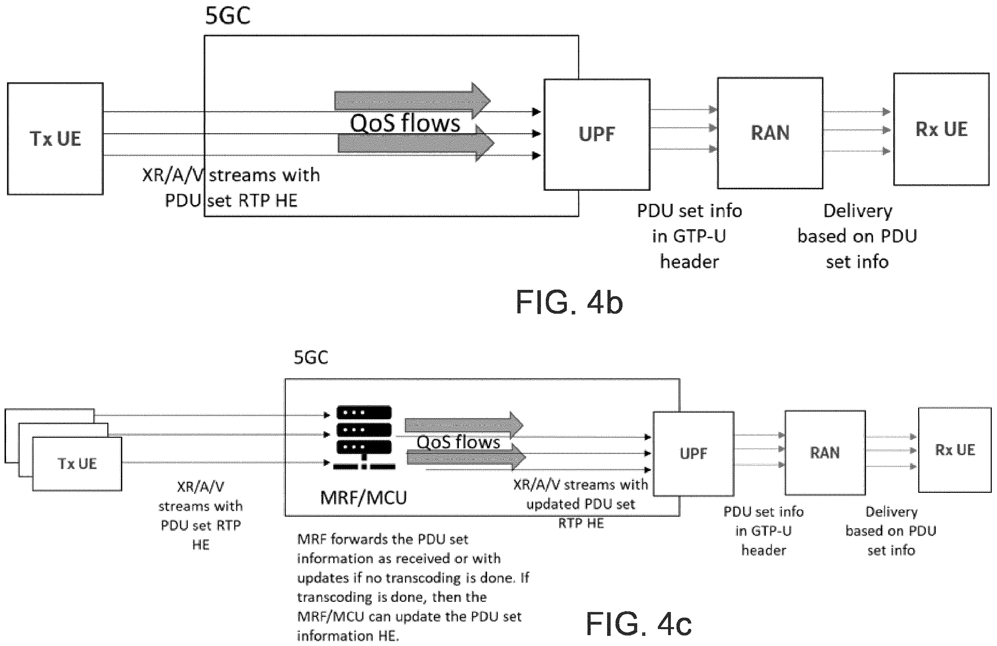

The second use case is the UE-UE case. The PDU set information RTP HE is included the by sender UE (Tx UE). The HE is not utilized in the uplink. On the downlink, the UPF uses the PDU set information HE to mark the GTP-U header which is used by RAN for the downlink delivery to the UE. The use case is shown in Figure 4b.

The third use case is the UE-MRF-UE or a UE-MCU-UE case. There may be different ways in which the PDU set information is marked in this use case. If the Multipoint Control Unit/ Media Resource Function (MRF/MCU) transcodes the streams, then it should add the PDU set information RTP HE for the downlink streams. Thus, there is no need for the Tx UE to send the PDU set information. If the MRF/MCU does not transcode the streams, then the Tx UEs can include the PDU set information RTP HE, which is not utilized in the uplink. Even if no transcoding is applied, the MRF/MCU may multiplex different streams and/or distribute them over different QoS flows using the information in the PDU set RTP HE, and thus update the PDU set information HE. On the downlink, the UPF uses the PDU set information HE to mark the GTP-U header which is used by RAN for the downlink delivery to the UE. The use case is shown in Figure 4c.

The PDU set information RTP HE can be negotiated using SDP for each use case. Receivers not supporting it can simply ignore the HE.

### RAN Sleep Cycle

The 3GPP specifications for the 5G/NR networks set various requirements for energy efficiency of the UE and the network elements. For example, TS 22.261 states the following requirements for Energy Efficiency in 3GPP Release 19:

The 5G access network shall support an energy saving mode with the following characteristics:
- the energy saving mode can be activated/deactivated either manually or automatically;
- service can be restricted to a group of users (e.g. public safety user, emergency callers).
   NOTE: When in energy saving mode, the transmit power of the UE and/or the Access Node may be reduced or turned off (deep sleep mode), end-to-end latency and jitter may be increased with no impact on the set of users or applications which are still allowed.

- The 5G system shall support mechanisms to improve battery life for a UE over what is possible in EPS.
- The 5G system shall optimize the battery consumption of a relay UE via which a UE is in indirect network connection mode.
- The 5G system shall support UEs using small rechargeable and single coin cell batteries (e.g. considering impact on maximum pulse and continuous current).

3GPP TR 38.840 defines the UE power model by specifying three sleep states for a UE, with increasing power consumption: deep, light, and micro sleep. Transition time between active mode and sleep mode as well as between sleep mode and active mode depends on the sleep state. 3GPP TR 38.840 defines the transition time at least 20ms, 6ms, and undefined (interpreted as 0ms) for deep, light, and micro sleep states, respectively.

Currently, the most prominent procedure for a UE to achieve energy savings is the C-DRX (Connected Mode Discontinuous Reception). Therein, a connected-mode UE may control its transceiver chain to shut down for extended periods of time, thereby avoiding excessive battery consumption. When a UE is configured with DRX, it periodically turns on and starts its on-duration timer according to the DRX cycle. as long as the on-duration timer does not expire, the UE must monitor the PDCCH to check for possible grants. After the on-duration timer expires, the UE has the opportunity to enter a sleep mode until the end of the DRX cycle. It could skip decoding PDCCH and turn off its RF module to save energy. Thus, the UE decides, according to its own implementation, which of the three sleep states it shall trigger according e.g. to the DRX parameters and the remaining time before the next DRX cycle. The UE shuts down certain components of its RF chain, depending on the selected sleep state. For example, in the deep sleep state, the UE RF chain is completely shutdown and the UE cannot monitor or receive control or data channels. Consequently, to transition from one state to another, a certain delay always takes place until the UE has fully transitioned to the required state. For example, to transition from deep sleep to active state, about 20 ms delay takes place until the UE is fully available for reception.

A DRX mechanism with the power saving signal configuration has been designed based on 3GPP TS38.213 and TS38.321, wherein another opportunity to monitor DCP (Downlink Control information of Power saving) is provided to the UE. The timing of monitoring is called DCP occasion. A dormant UE should monitor the DCP to determine whether to enter the on-duration in the next DRX cycle. If the DCP indicates off, the UE will stay dormant in the next DRX cycle. If the UE receives an on-indication, it will enter the active state in the next DRX cycle. If all DCPs are skipped, the UE still wakes up in the next DRX cycle. The power saving signal enables the gNB to explicitly inform the UE whether it would be scheduled for downlink transmission in the next on-duration. The delivery of DCP provides benefits especially in Frequency Range 2 (FR2) communication.

### Data Burst in PDU set marking RTP HE

A Data Burst is as a set of multiple PDUs generated and sent by the application such that there is an idle period between two bursts. A Data Burst can be composed of one or multiple PDU sets.

The End of Burst indication (EDB) informs the UE that there is an opportunity to transition to a sleep state until the beginning of the next burst and enables the usage of power saving mechanisms like DRX and PDCCH monitoring adaptation schemes (e.g., SSSG switching, PDCCH skipping, PDCCH sparse monitoring). However, the EDB does not provide enough information, as such, for the UE or RAN to determine the appropriate power/sleep state for maximal power saving. The optimal power state depends on the idle period until the next burst is received by the UE (time to next burst, a.k.a. inter-burst time).

In the case of single-burst transmission, the idle period is largely determined by the frame interval (e.g., ~33 ms for 30 fps). However, it may vary from burst to burst depending on the variations in frame rate and when a PDU set (slice or frame) is made available by the encoder, which may depend on the scene complexity. Furthermore, encoders that enable frame reordering may pass multiple frames to the RTP sender at once, such that the sender may send the PDUs belonging to consecutive frames in a single burst that lasts for multiple frame intervals. In the case of paced sending, the pacer sets the sending time of next packet/group of packets, meaning that the idle period is determined by the pacer, taking into account also the other constraints such as frame rate.

A PDU set header extension with a 3-bit field for burst indication in the mandatory fields of the header is proposed in S4-230487. The three-bit EDB field in the PDU set information RTP HE can be set using the following semantics:

| **Value** | **Description** |
|---|---|
| 000 | The sender does not have the means to sufficiently determine the time to next burst. |
| 001 | The PDU is not the last PDU in the burst. |
| 010 | The PDU is the last PDU of the burst and the time to next burst is more than the interval defined for micro sleep, i.e, 0ms. The UE can be put in micro sleep. |
| 011 | The PDU is the last PDU of the burst and the time to next burst is more than the interval defined for light sleep, i.e., 6ms. |
| 100 | The PDU is the last PDU of the burst and the time to next burst is more than the interval defined for deep sleep, i.e., 20ms. |

The deep sleep, light sleep and micro sleep states are as defined in the TR 38.840.

An RTP sender shall determine the time to next burst based on its wall clock time. It is noted that network jitter aspects are not included in the burst indication and the timing is determined based on the time the sender transmits the PDU, not the time it reaches the receiver. Jitter estimates should not use the burst indicators and rely on traditional mechanisms used for RTP traffic, e.g., using RTP headers and RTCP reports.

If the sender does not have the means to sufficiently determine the time to next burst, the field shall be set to 000b and the network can use other methods to estimate time between bursts e.g., based on traffic monitoring. In case multiple streams are multiplexed into the same QoS flow or Data Radio Bearer (DRB), the EDB indications for multiple flows can be combined by the UPF or RAN, respectively.

### Extension for time to next burst

The PDU set information RTP HE may be extended to include a time to next burst indication. A sender that includes the time to next burst shall be signaled in SDP using the line:
a=extmap: 1 3gpp:pdu-set-info burst

When the extension is used, the PDU set information HE shall include a TTNB (Time To the Next Burst) field. The TTNB field shall appear immediately after the PSS (PDU Set Size) when it is used or immediately after the basic fields of the PDU set information RTP HE when PSS is not used. The TTNB field is 8 bits in length and is expressed in milliseconds. The TTNB indication can be used by the receiver UE to initiate the corresponding sleep state. The TTNB field shall be set to 0 if EDB is equal to 000b, i.e., the sender does not have the means to determine the idle period, or if EDB is equal to 001b, i.e., the current PDU is not the last PDU of the burst.

Thus, it may be concluded from the above that a sender entity, such as an application server or another user equipment, may not always know the exact time to next burst with a millisecond precision. Burst information may be provided using sleep thresholds in this case, which also saves the number of bits that need to be carried in a PDU set marking HE. There is no mechanism to change the thresholds in the EDB field dynamically such that the relevant network elements are updated.

In the following, an enhanced method for updating the thresholds will be described in more detail, in accordance with various embodiments.

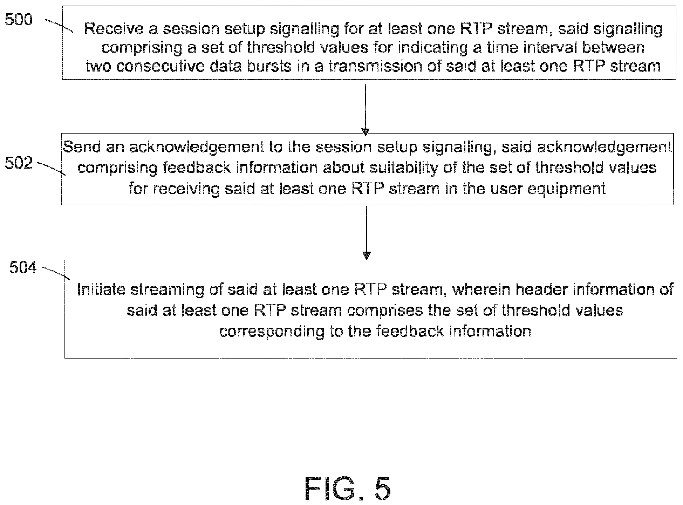

The method, which is disclosed in flow chart of Figure 5 as reflecting the operation of a terminal apparatus, such as a user equipment (UE), wherein the method comprises receiving (500) a session setup signalling for at least one Real-time Transport Protocol (RTP) stream, said signalling comprising a set of threshold values for indicating a time interval between two consecutive data bursts in a transmission of said at least one RTP stream; sending (502) an acknowledgement to the session setup signalling, said acknowledgement comprising feedback information about suitability of the set of threshold values for receiving said at least one RTP stream in the user equipment; and initiating (504) streaming of said at least one RTP stream, wherein header information of said at least one RTP stream comprises the set of threshold values corresponding to the feedback information.

Thus, upon a session setup a sender, such as an application server or another user equipment, signals the user equipment that streaming of an RTP stream with a header extension provided with a set of threshold values for indicating a time interval between two consecutive data bursts, i.e. PDU set marking with burst information based on an initial set of default thresholds, is enabled. The signalling may be carried out e.g. as SDP signalling, wherein the signalling may include the initial set of threshold values. The UE may determine the suitability of the set of threshold values for receiving said at least one RTP stream.

According to an embodiment, the method comprises determining an updated set of threshold values, wherein said acknowledgement comprises the updated set of threshold values.

Thus, the UE may accept the initial set of threshold values or it may determine updated values to be used. The UE sends an acknowledgement to the session setup signalling including this feedback; i.e. either the initial or the updated set of threshold values should be used. When the streaming of the RTP stream is initiated, the stream is provided with an RTP HE including a PDU set marking having a set of threshold values according to the feedback information from the UE.

According to an embodiment, the method comprises receiving a configuration for power saving settings.

As the RTP streaming starts, the RAN, e.g. the gNB therein, may receive information from the UPF in the GTP-U header, wherein the UPF has updated time to next burst information from one or more RTP streams based on their QoS flows. Based on this information, the gNB may trigger signals to the UE for better power optimization during the delivery of the RTP streams.

According to an embodiment, the method comprises determining an updated set of threshold values for the initiated at least one RTP stream at least partly based on the configuration for power saving settings.

The UE may use the information available in the PDU set marking RTP header extension as well as information from the RAN on power optimization to provide the feedback to the sender.

According to an embodiment, the method comprises sending feedback information about the updated set of threshold values in a Real-time Transport Control Protocol (RTCP) message.

Thus, the UE may send, for example, RTCP FB messages (as disclosed in RFC4585) in Immediate Feedback mode or Early RTCP mode such that that the requirement of minimum interval of 5 seconds between the regular RTCP messages is dropped. The feedback may contain new triggers to be used or reports that the sender can use to redefine triggers.

According to an embodiment, the suitability of the set of threshold values for receiving said at least one RTP stream and/or updating the set of threshold values is performed based on one or more of the following:
- an observed jitter;
- adaptation of media frame rate;
- used pacing strategy;
- periodicity of the traffic;
- used encoder configuration.

Thus, the EDB thresholds may be adjusted based on:
- Observed jitter: For example, if the threshold is set to 6 ms, and the jitter is high enough to make triggering of the sleep cycle inefficient unless the time to next burst is at least 8ms, this may lead to changing the EDB thresholds. The jitter value may be computed e.g. by the application server based on the receiver (UE) reports. The thresholds may be automatically adjusted, or the adjustment may be performed based on an explicit RTCP feedback from the receiver UE.

- Adaptation of the media frame rate: The sender may adapt the frame rate based on an estimation of the available bandwidth. For example, if the frame rate is reduced to half, time to next burst doubles, which requires the thresholds to be adjusted.
- Updated pacing strategy: The sender (e.g., a WebRTC peer/server) may use a pacer module for congestion control purposes (i.e. to smooth the flow of packets sent onto the network). Based on changing bandwidth conditions or congestion control algorithm parameters, the sender may start to use a different pacing approach, e.g., send a smaller/larger number of packets in one burst. In this case, the thresholds may need to be adjusted to account for the modified time to next burst.
- Periodicity of the traffic: when the periodicity of the traffic is known to the gNB (for instance via TSCAI), one code point or threshold for the EDB signaled in RTP HE can refer to the next period when the TTNB matches the periodicity. When receiving that value for the EDB field, the receiver knows that the next burst will occur according to the periodicity of the traffic.
- Updated encoder configuration: The sender may switch to a different encoder configuration that causes the packets of multiple frames to be sent together in one burst. For example, if frame reordering is applied, an encoder must reorder frames such that frames can be decoded in a different order than their display order. In that case, the encoder will pass multiple frames together to the RTP packetizer module and those are transmitted in one burst.

When the thresholds are updated, the sender carries an extension to the PDU set marking HE that defines the new trigger values. The UPF is thus made aware of the new thresholds in the HE.

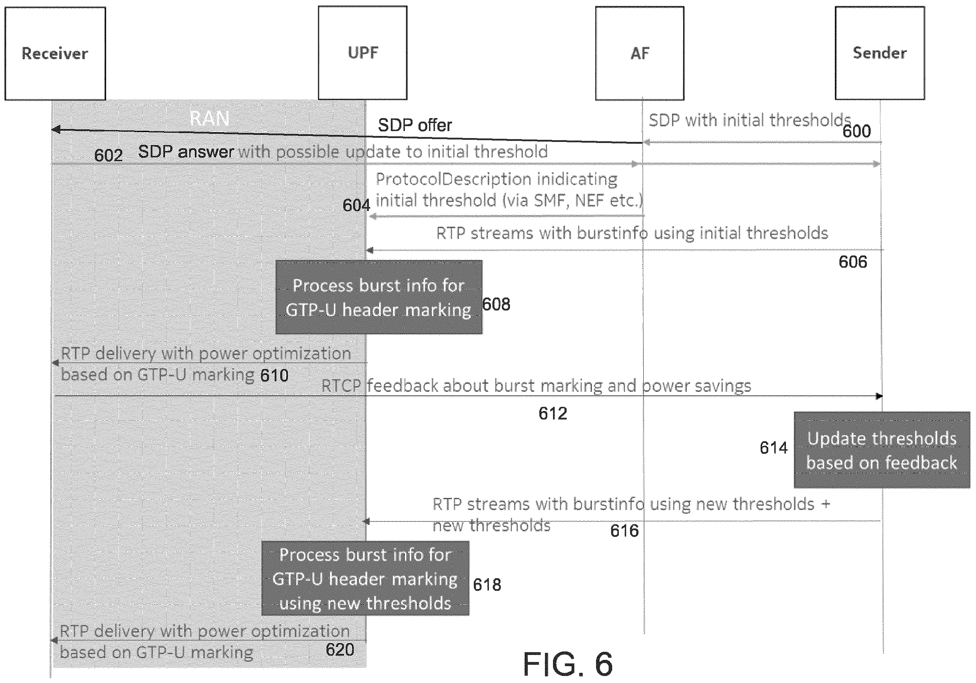

Consequently, the method provides a mechanism to change the thresholds in the EDB field dynamically. Nevertheless, the threshold values are not changed in the UE only, but all relevant network elements are also updated. The signalling chart of Figure 6 illustrates the network elements and the signalling involved in various embodiments.

In Figure 6, a sender refers to an entity, such as an application server or another user equipment, which prepares to deliver an RTP stream to a receiver, i.e. a UE. In the session setup phase, the sender signals using SDP to an Application Function (AF) of the core network that an RTP HE with PDU set marking will be used and the header will include burst information based on an initial set of default thresholds (600). The SDP offer towards to the receiver may be initiated by the AF and include the initial thresholds for burst marking. The initial thresholds for the burst marking may be defined by the Mobile Network Operator based on a Release or type of network. The receiver may update the default thresholds to a new value in this SDP answer (602). The AF then informs the User Plane function (UPF) about the new thresholds via Session Management Function (SMF) or another network element (604). The initial values for threshold may be communicated directly or may be provided using a URI or ProtocolDescription associated with a fixed set of initial thresholds.

After the session setup, the media delivery may start. The sender delivers an RTP stream destined to the receiver with the RTP header extension for PDU set marking and burst information based on the initial thresholds. The UPF receives one or more streams from the sender for the receiver UE (606). The UPF processes the time to next burst information from these one or more streams and marks the GTP-U header based on the QoS flows for these RTP streams (608).

The information carried in the GTP-U header may be only the end of burst marking, i.e., the burst has ended. The UPF may use the additional information in the PDU set marking RTP HE across streams, taking into account also jitter, to mark the GTP-U header appropriately.

Alternatively, the GTP-U header may also carry the burst info based on some thresholds that are fixed. The UPF may mark the GTP-U header based on burst info and jitter experienced by packets between sender and UPF, discounting the jitter between gNB and UE as it may not be known.

The RAN may use the information in the GTP-U header to trigger signals to the UE for better power optimization during the delivery of the RTP streams (610). The receiver uses the information available in the PDU set marking RTP header extension as well as information from the PHY layer on power optimization to provide feedback to the sender using RTCP reports/feedback (612). The sender updates the thresholds (614) if and when needed and includes the new thresholds in the PDU set marking RTP HE (616). The UPF updates the thresholds based on the information in the PDU set marking RTP HE and continues to mark the GTP-U header accordingly (618). The RAN also continues to trigger signals to the UE for better power optimization based the updated information in the GTP-U header (620). The receiver also updates the thresholds and may provide feedback accordingly as in step 612 above.

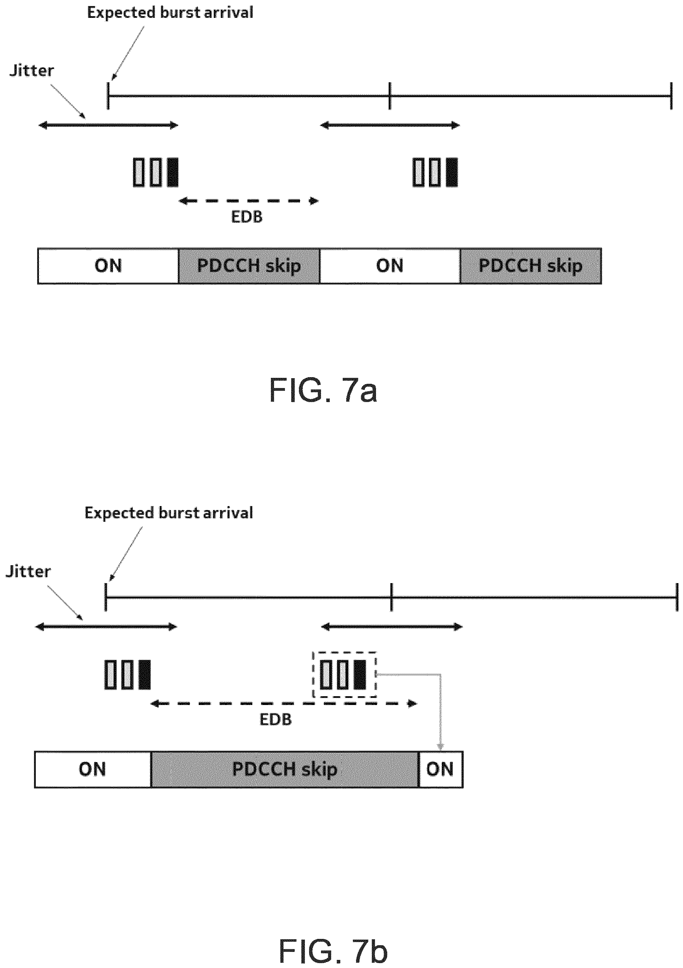

When thresholds and marking of EDB field in the PDU set information RTP HE are not precise with respect to the real burst arrival time, the following two events may occur:
1) UE wakes up too early (or equivalently it does not remain inactive enough) and the power saving is suboptimal. This problem is illustrated in Figure 7a.
2) UE is put in sleep for too long after receiving the last PDU in the burst and the delivery of the next PDU Set is delayed, potentially resulting in the PDU Set exceeding its PDU Set Delay Budget (PSDB). This problem is illustrated in Figure 7b.

These problems can be detected by the UE and their detection can trigger the RTCP feedback. In Figures 7a and 7b, rectangles indicate PDUs. Black rectangle indicates the last PDU in the data burst, which contains the EDB field used by power saving schemes, like PDCCH skipping, to reduce the monitoring of PDCCH, thus reducing the UE power consumption. The EDB is depicted as a dashed arrows between two consecutive data bursts, which are composed of 3 PDUs each. ON indicates the UE Active Time, while PDCCH Skip indicates the time when the UE is not monitoring the PDCCH (e.g., because a PDCCH skipping command has been sent by the network).

### Problem 1: short EDB (e.g., 010)

According to an embodiment, the method comprises measuring a ratio between time spent for receiving data by a receiver and overall active time of the receiver; and in response to said ratio being larger than a predetermined threshold, sending feedback to a sender. Thus, the UE detects that the EDB is shorter than it should be by measuring the ratio between the time spent for receiving data (including PDCCH scheduling information) and the overall active time (due to the beginning of the DRX cycle), wherein the ratio is larger than a certain threshold (e.g. thresholds). The time spent for receiving data can be measured by the UE with a dedicated timer that is triggered when the DRX Inactivity Timer is triggered for the first time within the DRX cycle. In other words, if the UE notices that most of the active time is spent without receiving neither data nor scheduling information, it may send the RTCP feedback.

### Problem 2: long EDB (e.g., 110)

Herein, two cases may occur:
1) The PSDB expires and the PDUs of the burst are discarded by the network.
2) The PSDB expires and the PDUs of the burst are delivered beyond the delay budget.

In the first case (Problem 2.1), the UE can detect the discarded PDU Sets by checking the Sequence Number of the delivered PDU Sets. If the received SNs are not continuous, one or more PDUs in a burst have been dropped by the network. Additionally, the UE keeps measuring the channel quality. If the channel was good (e.g., the CQI was higher than a threshold and HARQ errors lower than another threshold), then the loss of the PDUs is due to the power saving schemes like PDCCH monitoring adaptation, which have been triggered by the wrong EDB information. The UE can therefore send a RTCP feedback to the AS to update the thresholds.

In the second case (Problem 2.2), the application running in the UE knows that the PDU Set has been delivered beyond the delay budget. If the channel was good, then the delay has been caused again by the power saving schemes, which have been triggered by the wrong EDB information. The UE can therefore send a RTCP feedback to the AS to update the thresholds.

In an embodiment, the UE can determine the fraction of data bursts where EDB was suboptimal (in a given reporting period) by counting the number of times EDB was shorter/longer than optimal and indicate this information to the sender in an RTCP feedback message. The sender then decides based on the RTCP feedback whether to update the thresholds. For example, the sender may decide to update the thresholds if EDB was suboptimal in 10% of data bursts in a given reporting period, or it may use a more relaxed strategy and update the thresholds if EDB was suboptimal in 20% of the data bursts.

In an embodiment, the defined thresholds indicate the frame rate of the media instead of the time to next burst. For example, the thresholds may be set as 1, 0.5 and 0.33 to indicate that the current frame rate is hundred percent, fifty percent or one-third of the maximum frame rate. The maximum frame rate may be indicated in the session setup. In another example, the thresholds may be set as in frames per seconds (fps), e.g., 60fps, 45 fps and 30fps.

Since the frame rate is only determined by the sender, the indication of new thresholds may be sent by the sender of the media to inform UPF or radio. A change in frame rate can help the network differentiate between delay caused by jitter and application changes in the packet rate for e.g., bandwidth adaptation or addition/removal of multiplexed media. The changes in frame rate can be taken into account by the RAN when triggering signals to the UE for better power optimization.

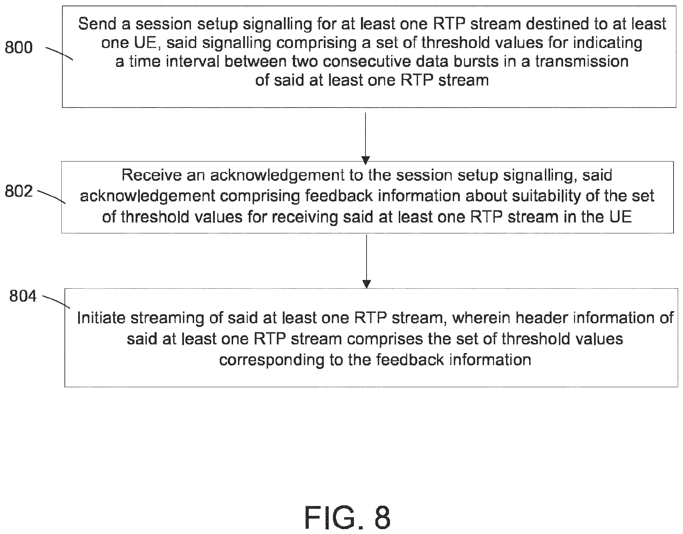

Another aspect relates to the operation of a sender, such as an application server or another user equipment (UE), for enabling the implementation of the embodiments. Figure 8 shows a flow chart reflecting the operation of a sender entity corresponding to that of the operation of the terminal apparatus in the flow chart of Figure 5. The method comprises sending (800) a session setup signalling for at least one Real-time Transport Protocol (RTP) stream destined to at least one user equipment, said signalling comprising a set of threshold values for indicating a time interval between two consecutive data bursts in a transmission of said at least one RTP stream; receiving (802) an acknowledgement to the session setup signalling, said acknowledgement comprising feedback information about suitability of the set of threshold values for receiving said at least one RTP stream in the user equipment; and initiating (804) streaming of said at least one RTP stream, wherein header information of said at least one RTP stream comprises the set of threshold values corresponding to the feedback information.

The methods and the related embodiments may provide various advantages. The method and the related embodiments enable a feedback mechanism from the receiver UE to the sender to indicate that the thresholds need to be changed. Further, a reporting mechanism from the receiver UE to the sender is provided to indicate the usefulness of the EDB. Moreover, method and the related embodiments enable a mechanism for the sender to update the thresholds and indicate to the network (e.g., UPF and RAN) the new thresholds.

An apparatus, such as a UE, according to an aspect comprises means for receiving a session setup signalling for at least one Real-time Transport Protocol (RTP) stream, said signalling comprising a set of threshold values for indicating a time interval between two consecutive data bursts in a transmission of said at least one RTP stream; means for sending an acknowledgement to the session setup signalling, said acknowledgement comprising feedback information about suitability of the set of threshold values for receiving said at least one RTP stream in the apparatus; and means for initiating streaming of said at least one RTP stream, wherein header information of said at least one RTP stream comprises the set of threshold values corresponding to the feedback information.

According to an embodiment, the apparatus comprises means for determining an updated set of threshold values, wherein said acknowledgement comprises the updated set of threshold values.

According to an embodiment, the apparatus comprises means for receiving a configuration for power saving settings.

According to an embodiment, the apparatus comprises means for determining an updated set of threshold values for the initiated at least one RTP stream at least partly based on the configuration for power saving settings.

According to an embodiment, the apparatus comprises means for sending feedback information about the updated set of threshold values in a Real-time Transport Control Protocol (RTCP) message.

According to an embodiment, the apparatus comprises means for measuring a ratio between time spent for receiving data by a receiver of the apparatus and overall active time of the receiver; means for updating, in response to said ratio being larger than a predetermined threshold, the set of threshold values; wherein said means for sending feedback are configured to send the updated set of threshold values.

According to an embodiment, updating the threshold values is triggered by one or more of the following:
- determining that one or more Protocol Data Units (PDUs) in a burst have been dropped by a network;
- determining that a PDU Set has been delivered beyond a predetermined delay budget.

According to an embodiment, the suitability of the set of threshold values for receiving said at least one RTP stream and/or updating the set of threshold values is performed based on one or more of the following:
- an observed jitter;
- adaptation of media frame rate;
- used pacing strategy;
- periodicity of the traffic;
- used encoder configuration.

An apparatus according to a further aspect comprises at least one processor and at least one memory, said at least one memory stored with computer program code thereon, the at least one memory and the computer program code configured to, with the at least one processor, cause the apparatus at least to perform: receive a session setup signalling for at least one Real-time Transport Protocol (RTP) stream, said signalling comprising a set of threshold values for indicating a time interval between two consecutive data bursts in a transmission of said at least one RTP stream; send an acknowledgement to the session setup signalling, said acknowledgement comprising feedback information about suitability of the set of threshold values for receiving said at least one RTP stream in the apparatus; and initiate streaming of said at least one RTP stream, wherein header information of said at least one RTP stream comprises the set of threshold values corresponding to the feedback information.

According to an embodiment, the apparatus comprises computer program code configured to, with the at least one processor, cause the apparatus at least to determine an updated set of threshold values, wherein said acknowledgement comprises the updated set of threshold values.

According to an embodiment, the apparatus comprises computer program code configured to, with the at least one processor, cause the apparatus at least to receive a configuration for power saving settings.

According to an embodiment, the apparatus comprises computer program code configured to, with the at least one processor, cause the apparatus at least to determine an updated set of threshold values for the initiated at least one RTP stream at least partly based on the configuration for power saving settings.

According to an embodiment, the apparatus comprises computer program code configured to, with the at least one processor, cause the apparatus at least to send feedback information about the updated set of threshold values in a Real-time Transport Control Protocol (RTCP) message.

According to an embodiment, the apparatus comprises computer program code configured to, with the at least one processor, cause the apparatus at least to measure a ratio between time spent for receiving data by a receiver of the apparatus and overall active time of the receiver; update, in response to said ratio being larger than a predetermined threshold, the set of threshold values; wherein said means for sending feedback are configured to send the updated set of threshold values.

According to an embodiment, updating the threshold values is triggered by one or more of the following:
- determining that one or more Protocol Data Units (PDUs) in a burst have been dropped by a network;
- determining that a PDU Set has been delivered beyond a predetermined delay budget.

According to an embodiment, the suitability of the set of threshold values for receiving said at least one RTP stream and/or updating the set of threshold values is performed based on one or more of the following:
- an observed jitter;
- adaptation of media frame rate;
- used pacing strategy;
- periodicity of the traffic;
- used encoder configuration.

An apparatus, such as an application server, according to an aspect comprises means for sending a session setup signalling for at least one Real-time Transport Protocol (RTP) stream destined to at least one user equipment, said signalling comprising a set of threshold values for indicating a time interval between two consecutive data bursts in a transmission of said at least one RTP stream; means for receiving an acknowledgement to the session setup signalling, said acknowledgement comprising feedback information about suitability of the set of threshold values for receiving said at least one RTP stream in the user equipment; and means for initiating streaming of said at least one RTP stream, wherein header information of said at least one RTP stream comprises the set of threshold values corresponding to the feedback information.

According to an embodiment, the apparatus comprises means for receiving an updated set of threshold values in said acknowledgement; and means for updating the threshold values.

According to an embodiment, the apparatus comprises means for including the updated threshold values in a RTP Header Extension with a Protocol Data Unit (PDU) set marking.

According to an embodiment, the apparatus comprises means for receiving feedback information about the updated set of threshold values in a Real-time Transport Control Protocol (RTCP) message.

Such an apparatus may also be implemented as comprising at least one processor and at least one memory, said at least one memory stored with computer program code thereon, the at least one memory and the computer program code configured to, with the at least one processor, cause the apparatus at least to perform: send a session setup signalling for at least one Real-time Transport Protocol (RTP) stream destined to at least one user equipment, said signalling comprising a set of threshold values for indicating a time interval between two consecutive data bursts in a transmission of said at least one RTP stream; receive an acknowledgement to the session setup signalling, said acknowledgement comprising feedback information about suitability of the set of threshold values for receiving said at least one RTP stream in the user equipment; and initiate streaming of said at least one RTP stream, wherein header information of said at least one RTP stream comprises the set of threshold values corresponding to the feedback information.

According to an embodiment, the apparatus comprises computer program code configured to, with the at least one processor, cause the apparatus at least to receive an updated set of threshold values in said acknowledgement; and means for updating the threshold values.

According to an embodiment, the apparatus comprises computer program code configured to, with the at least one processor, cause the apparatus at least to include the updated threshold values in a RTP Header Extension with a Protocol Data Unit (PDU) set marking.

According to an embodiment, the apparatus comprises computer program code configured to, with the at least one processor, cause the apparatus at least to receive feedback information about the updated set of threshold values in a Real-time Transport Control Protocol (RTCP) message.

Such apparatuses may comprise e.g. the functional units disclosed in any of the Figures 1- 3 for implementing the embodiments.

A further aspect relates to a computer program product, stored on a non-transitory memory medium, comprising computer program code, which when executed by at least one processor, causes an apparatus at least to perform: receive a session setup signalling for at least one Real-time Transport Protocol (RTP) stream, said signalling comprising a set of threshold values for indicating a time interval between two consecutive data bursts in a transmission of said at least one RTP stream; send an acknowledgement to the session setup signalling, said acknowledgement comprising feedback information about suitability of the set of threshold values for receiving said at least one RTP stream in the apparatus; and initiate streaming of said at least one RTP stream, wherein header information of said at least one RTP stream comprises the set of threshold values corresponding to the feedback information.

A yet further aspect relates to a computer program product, stored on a non-transitory memory medium, comprising computer program code, which when executed by at least one processor, causes an apparatus at least to perform: send a session setup signalling for at least one Real-time Transport Protocol (RTP) stream destined to at least one user equipment, said signalling comprising a set of threshold values for indicating a time interval between two consecutive data bursts in a transmission of said at least one RTP stream; receive an acknowledgement to the session setup signalling, said acknowledgement comprising feedback information about suitability of the set of threshold values for receiving said at least one RTP stream in the user equipment; and initiate streaming of said at least one RTP stream, wherein header information of said at least one RTP stream comprises the set of threshold values corresponding to the feedback information.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
means for receiving a session setup signalling for at least one real-time transport protocol stream, said signalling comprising a set of threshold values for indicating a time interval between two consecutive data bursts in a transmission of said at least one real-time transport protocol stream;
means for sending an acknowledgement to the session setup signalling, said acknowledgement comprising feedback information about suitability of the set of threshold values for receiving said at least one real-time transport protocol stream in the apparatus; and
means for initiating streaming of said at least one real-time transport protocol stream, wherein header information of said at least one real-time transport protocol stream comprises the set of threshold values corresponding to the feedback information.

2. The apparatus according to claim 1, comprising
means for determining an updated set of threshold values, wherein said acknowledgement comprises the updated set of threshold values.

3. The apparatus according to claim 1 or 2, comprising
means for receiving a configuration for power saving settings.

4. The apparatus according to claim 3, comprising
means for determining an updated set of threshold values for the initiated at least one real-time transport protocol stream at least partly based on the configuration for power saving settings.

5. The apparatus according to claim 4, comprising
means for sending feedback information about the updated set of threshold values in a real-time transport control protocol message.

6. The apparatus according to claim 5, comprising
means for measuring a ratio between time spent for receiving data by a receiver of the apparatus and overall active time of the receiver;
means for updating, in response to said ratio being larger than a predetermined threshold, the set of threshold values; wherein
said means for sending feedback are configured to send the updated set of threshold values.

7. The apparatus according to claim 5, wherein updating the threshold values is triggered by one or more of the following:
- determining that one or more protocol data units in a burst have been dropped by a network;
- determining that a protocol data unit Set has been delivered beyond a predetermined delay budget.

8. The apparatus according to any preceding claim, wherein the suitability of the set of threshold values for receiving said at least one real-time transport protocol stream and/or updating the set of threshold values is performed based on one or more of the following:
- an observed jitter;
- adaptation of media frame rate;
- used pacing strategy;
- periodicity of the traffic;
- used encoder configuration.

9. A method comprising:
receiving, by a user equipment, a session setup signalling for at least one real-time transport protocol stream, said signalling comprising a set of threshold values for indicating a time interval between two consecutive data bursts in a transmission of said at least one real-time transport protocol stream;
sending an acknowledgement to the session setup signalling, said acknowledgement comprising feedback information about suitability of the set of threshold values for receiving said at least one real-time transport protocol stream in the user equipment; and
initiating streaming of said at least one real-time transport protocol stream, wherein header information of said at least one real-time transport protocol stream comprises the set of threshold values corresponding to the feedback information.

10. The method according to claim 9, comprising
determining an updated set of threshold values, wherein said acknowledgement comprises the updated set of threshold values.

11. An apparatus comprising:
means for sending a session setup signalling for at least one real-time transport protocol stream destined to at least one user equipment, said signalling comprising a set of threshold values for indicating a time interval between two consecutive data bursts in a transmission of said at least one real-time transport protocol stream;
means for receiving an acknowledgement to the session setup signalling, said acknowledgement comprising feedback information about suitability of the set of threshold values for receiving said at least one real-time transport protocol stream in the user equipment; and
means for initiating streaming of said at least one real-time transport protocol stream, wherein header information of said at least one real-time transport protocol stream comprises the set of threshold values corresponding to the feedback information.

12. The apparatus according to claim 11, comprising
means for receiving an updated set of threshold values in said acknowledgement; and
means for updating the threshold values.

13. The apparatus according to claim 12, comprising
means for including the updated threshold values in a real-time transport protocol header extension with a protocol data unit set marking.

14. The apparatus according to any of claims 11 - 13, comprising
means for receiving feedback information about the updated set of threshold values in a real-time transport control protocol message.

15. A method comprising:
sending a session setup signalling for at least one real-time transport protocol (RTP) stream destined to at least one user equipment, said signalling comprising a set of threshold values for indicating a time interval between two consecutive data bursts in a transmission of said at least one real-time transport protocol stream;
receiving an acknowledgement to the session setup signalling, said acknowledgement comprising feedback information about suitability of the set of threshold values for receiving said at least one real-time transport protocol stream in the user equipment; and
initiating streaming of said at least one real-time transport protocol stream, wherein header information of said at least one real-time transport protocol stream comprises the set of threshold values corresponding to the feedback information.
